# EUROPÄISCHE PATENTSCHRIFT

(11) **EP 3 942 173 B1**
(45) Veröffentlichungstag und Bekanntmachung des Hinweises auf die Patenterteilung: **22.06.2022**
(21) Anmeldenummer: 19715016.2
(22) Anmeldetag: 22.03.2019
(51) Int. Cl.: F03B 3/12, F03B 3/18, F04D 29/60

(54) **VERFAHREN ZUR MONTAGE EINER WASSERKRAFTEINRICHTUNG**
METHOD FOR ASSEMBLING A HYDROPOWER DEVICE
PROCÉDÉ DE MONTAGE D'UN DISPOSITIF À FORCE HYDRAULIQUE

(43) Veröffentlichungstag der Anmeldung: 26.01.2022
(73) Patentinhaber: Voith Patent GmbH, 89522 Heidenheim (DE)
(72) Erfinder: KECK, Benjamin, 89522 Heidenheim (DE); MERKL, Christian, 89518 Heidenheim (DE); SIENZ, Stephan, 73457 Essingen (DE)
(74) Vertreter: Voith Patent GmbH - Patentabteilung
(86) Internationale Anmeldenummer: PCT/EP2019/057245
(87) Internationale Veröffentlichungsnummer: WO 2020/192867

(56) Entgegenhaltungen:
- DE-T3- 69 303 085
- JP-A- H06 213 132
- JP-A- S62 170 781
- RAABE ED - STROEBEL L ET AL: "Hydralisce Maschinen und Anlagen", 1. Januar 1989 (1989-01-01), FOCAL ENCYCLOPEDIA OF PHOTOGRAPHY, BOSTON, FOCAL PRESS, US, PAGE(S) 749 - 752, XP002148007, das ganze Dokument

## Beschreibung

Die Erfindung betrifft ein Verfahren zur Montage einer Wasserkrafteinrichtung, wobei die Einrichtung eine hydraulische Maschine mit vertikaler Drehachse umfasst. Dabei kann es sich um eine Turbine, Pumpe oder Pumpturbine handeln. Die hydraulische Maschine umfasst ein Laufrad, das für einen radialen oder für einen axialen Strömungsverlauf ausgelegt ist. Laufräder mit radialen Strömungsverlauf sind beispielsweise vom Typ Francis. Bei hydraulischen Maschinen mit einem Laufrad für axialen Strömungsverlauf kann es sich beispielsweise um eine sogenannte Propellermaschine handeln.

Verfahren zur Montage einer Wasserkrafteinrichtung mit einer hydraulischen Maschine mit vertikaler Drehachse sind aus dem Stand der Technik bekannt. So offenbart die DE 693 03 085 T3 ein Verfahren bei dem das Laufrad und ein Teil des Leitapparats nach unten hin ausgebaut werden. Dazu wird ein unten gelegener Arbeitsraum benötigt. Andere Verfahren zur Montage erfordern, dass vor dem Ausbau der hydraulischen Maschine, die elektrische Maschine ausgebaut werden muss. Die bekannten Verfahren sind aufwendig und erfordern einen Zeitaufwand von wenigstens 10 Tagen. Insbesondere bei Wasserkrafteinrichtungen, die einem erhöhten Verschleiß bedingt durch eine schlechte Wasserqualität ausgesetzt sind, müssen hydraulische Komponenten wie Laufrad und Leitschaufeln sehr oft erneuert werden, so dass die durch die Montage dieser Komponenten bedingte Ausfallzeiten zu hohen Einbußen führen.

Ein weiteres Beispiel eines Verfahrens zur Montage einer Wasserkrafteinrichtung wird in JP S62 170781 A gezeigt.

Die Erfinder haben sich die Aufgabe gestellt, ein Verfahren zur Montage einer gattungsgemäßen hydraulischen Maschine anzugeben, das weniger aufwendig ist und weniger Zeit benötigt, so dass verschlissene Komponenten der hydraulischen Maschine in kürzerer Zeit ersetzt werden können.

Erfindungsgemäß wird diese Aufgabe durch ein Verfahren mit den Merkmalen des Anspruchs 1 gelöst. Weitere vorteilhafte Ausgestaltungen des erfindungsgemäßen Verfahrens ergeben sich aus den hiervon abhängigen Unteransprüchen.

Die Erfinder haben sich von dem Gedanken leiten lassen, die zu tauschenden hydraulischen Komponenten nach oben und seitlich aus- und einzubauen. Hierfür wird einen Montageraum benötigt, welcher in vertikaler Richtung zwischen dem Spiralgehäuse und der elektrischen Maschine angeordnet ist und sich in horizontaler Richtung über den Rand der elektrischen Maschine hinaus erstreckt und wenigstens in einem Teil des über den Rand der elektrischen Maschine hinausragenden Bereiches nach oben hin offen ist. Außerdem werden die wegen Verschleiß zu tauschenden hydraulischen Komponenten nicht einzeln demontiert, sondern in einem Modul, welches neben den verschlissenen Komponenten noch weitere Komponenten umfasst und welches als Ganzes aus- und eingebaut wird.

Die erfindungsgemäße Lösung wird nachfolgend anhand von Figuren erläutert. Darin ist im Einzelnen folgendes dargestellt:
- Figur 1: Wasserkrafteinrichtung;
- Figur 2: Ausschnitt aus der Wasserkrafteinrichtung von Figur 1;
- Figur 3: Erfindungsgemäßes Verfahren.

Vorab ist zu bemerken, dass im Folgenden der Begriff Turbine, sowohl eine reine Turbine als auch eine Pumpe oder eine reversible Pumpturbine bezeichnet. Das gilt auch für die zusammengesetzten Begriffe wie Turbinendeckel oder Turbinenführungslager.

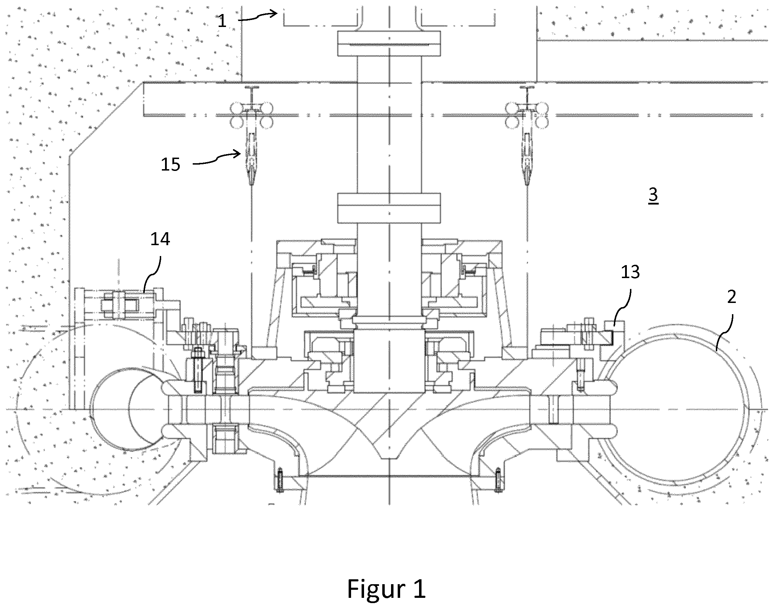

Figur 1 zeigt eine Wasserkrafteinrichtung, welche eine elektrische Maschine, ein Spiralgehäuse und einen Montageraum umfasst. Die elektrische Maschine ist mit 1 bezeichnet, wobei Figur 1 nur einen kleinen Teil derselben zeigt. Das Spiralgehäuse ist mit 2 bezeichnet. Der Montageraum ist mit 3 bezeichnet. Er erstreckt sich in vertikaler Richtung zwischen dem Spiralgehäuse und der elektrischen Maschine und ragt in horizontaler Richtung über den Rand der elektrischen Maschine hinaus, wobei wenigstens in einem Teil des über den Rand der elektrischen Maschine hinausragenden Bereiches nach oben hin offen ist. In Figur 1 ist der nach oben hin offene Teil des Montageraumes 3 nicht dargestellt. Dieser befindet sich rechts von dem in Figur 1 dargestellten Ausschnitt.

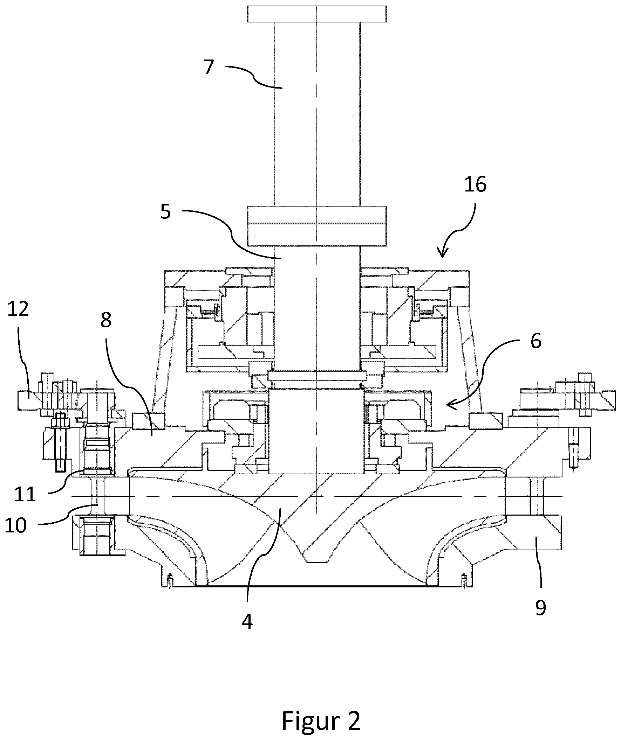

Figur 2 zeigt einen vergrößerten Ausschnitt aus der in Figur 1 dargestellten Wasserkrafteinrichtung, welche ferner ein Laufrad, eine Laufradwelle, eine Wellendichtung, eine Zwischenwelle, einen Turbinendeckel, einen Leitradring, eine Vielzahl von Leitschaufeln, eine Vielzahl von Leitschaufellager und einen Regelring umfasst. Dabei ist das Laufrad mit 4, die Laufradwelle mit 5, die Wellendichtung mit 6, die Zwischenwelle mit 7, der Turbinendeckel mit 8, der Leitradring mit 9, eine der Leitschaufeln mit 10, eines der Leitschaufellager mit 11 und der Regelring mit 12 bezeichnet. Das in den Figuren 1 und 2 gezeigte Laufrad 4 ist vom Typ Francis. Wie eingangs erwähnt ist das erfindungsgemäße Verfahren jedoch nicht auf diesen Laufrad-Typ beschränkt.

Die Wasserkrafteinrichtung umfasst ferner eine Lagerung für den Regelring 12, welche in Figur 1 dargestellt und mit 13 bezeichnet ist, und einen Servomotor zum Betätigen des Regelringes 12, welcher in Figur 1 dargestellt und mit 14 bezeichnet ist.

Optional umfasst die Wasserkrafteinrichtung ein Turbinenführungslager, welches in Figur 2 dargestellt und mit 16 bezeichnet ist.

Die Wasserkrafteinrichtung umfasst ein Modul, welches die folgenden Komponenten umfasst: Das Laufrad 4, die Laufradwelle 5, die Wellendichtung 6, den Turbinendeckel 8, den Leitradring 9, alle Leitschaufeln 10 samt Leitschaufellager 11, den Regelring 12 und ggf. das Turbinenführungslager 16, wenn vorhanden. Als Modul verstehen wir eine Baugruppe, die als eine integrale Einheit ein- und ausgebaut werden kann. Dabei ist klar, dass die oben genannten Komponenten des Moduls nicht als ausschließliche Bestandteile desselben aufzufassen sind. Das Modul kann also noch weitere Komponenten umfassen, z.B. Bauteile, die die Verbindung zwischen den genannten Komponenten herstellen, wie Schrauben und Verbindungsstücke, oder wie beispielsweise auch die Hebel und Lenker, die die Leitschaufeln 10 mit dem Regelring 12 verbinden. Das Modul kann als weitere Komponenten auch Dichtelemente umfassen wie beispielsweise Labyrinth-Dichtungen zur Abdichtung zwischen dem Laufrad 4 und dem Turbinendeckel 8. Vom Verschleiß betroffenen sind dabei hauptsächlich nur das Laufrad 4 und die Leitschaufeln 10.

Zur Ausführung des erfindungsgemäßen Verfahrens umfasst der Montageraum 3 ferner Mittel, die eine vertikale und eine horizontale Bewegung des Moduls ermöglichen. Diese Mittel sind in Figur 1 angedeutet und mit 15 bezeichnet.

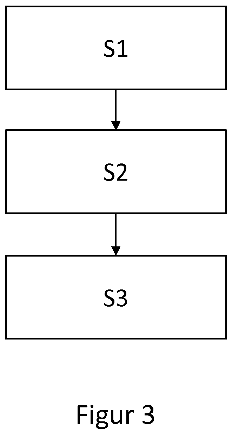

In Figur 3 sind die Verfahrensschritte des erfindungsgemäßen Montageverfahrens dargestellt, wobei jeder Verfahrensschritt ein oder mehrere Tätigkeiten umfassen kann. Das in Figur 3 dargestellte Verfahren betrifft dabei den Ausbau von Komponenten. Es ist klar, dass das entsprechende Verfahren zum Einbau einfach durch invertieren der beschriebenen Schritte und der damit verbunden Tätigkeiten zu erfolgen hat.

Im mit S1 bezeichneten Schritt wird die Demontage der Komponenten vorbereitet. Dazu werden folgende Tätigkeiten durchgeführt:
- Blockieren des Laufrades 4 gegenüber Rotation und vertikaler Verschiebung
- Installation der Mittel 15 zur vertikalen und eine horizontalen Bewegung des Moduls im Montageraum 3

Das Blockieren des Laufrades 4 kann beispielsweise mit Hilfe einer Klammer zwischen der Laufradwelle 5 und dem Turbinendeckel 8 bewirkt werden. Bei Kraftwerken mit mehreren Einheiten ist es von Vorteil, wenn die Mittel 15 nur einmal vorhanden sind und für alle Einheiten benutzt werden können. Es kann aber auch von Vorteil sein, wenn die Mittel permanent im den jeweiligen Montageräumen 3 verbleiben, da dadurch Zeit gespart werden kann. Dann müssen die Mittel 15 jedoch mehrfach vorhanden sein. Die Installation der Mittel 15 im Montageraum 3 ist daher als optional zu betrachten.

Im mit S2 bezeichneten Schritt werden die Verbindungen des Moduls mit den anderen Teilen der Wasserkrafteinrichtung gelöst. Dazu werden folgende Tätigkeiten durchgeführt:
- Abtrennen der Kabelverbindungen falls vorhanden
- Abtrennen der Rohrverbindungen falls vorhanden
- Abtrennen des Servomotors 14 vom Regelring 12
- Demontage der Abdeckung der Lagerung 13 des Regelringes 12
- Ausbau der Zwischenwelle 7
- Lösung der Verschraubung zwischen dem Moduls und dem Spiralgehäuse 2

Bei den Kabelverbindungen kann es sich beispielsweise um Kontrollkabel handeln. Rohrverbindungen können beispielsweise zur Wellendichtung 6 führen. Es ist dabei von Vorteil, wenn die genannten Verbindungen über Stecker bzw. Schnellkupplungen verfügen, da so die Montage beschleunigt werden kann. Die Abdeckung der Lagerung 13 hält den Regelring 12 in der Lagerung 13. Nach der Demontage der Abdeckung kann der Regelring 12 und damit das Modul nach oben aus der Lagerung 13 herausgeführt werden. In manchen Fällen kann es zum Ausbau der Zwischenwelle 7 notwendig sein, dass der Rotor der elektrischen Maschine 1 etwas angehoben wird. Der Ausbau der Zwischenwelle 7 erfolgt zweckmäßiger Weise mit Hilfe der Mittel 15. Die Verschraubung des Moduls kann beispielsweise darin bestehen, dass der Turbinendeckel 8 und/oder der Leitradring 9 mit Teilen des Spiralgehäuses 2 verbunden ist.

Im mit S3 bezeichneten Schritt wird das Modul ausgebaut. Dazu werden folgende Tätigkeiten durchgeführt:
- Befestigung des Moduls an den Mitteln 15
- Anheben des Moduls
- Horizontale Bewegung des Moduls

Das Modul muss so weit angehoben werden, dass die horizontale Bewegung desselben nicht durch das Spiralgehäuse 2 behindert wird. Das Modul wird soweit horizontal bewegt, bis es sich unterhalb der nach oben führenden Öffnung des Montageraumes 3 befindet. Dort kann das Modul vom Kran der Wasserkrafteinrichtung weiter befördert werden.

Es ist zu erwähnen, dass die unter den Schritten S1 und S2 aufgezählten Tätigkeiten bezüglich ihrer Abfolge innerhalb des jeweiligen Schrittes nicht auf die oben angegebene Reihenfolge festgelegt sind. Die Tätigkeiten können auch in einer anderen Reihenfolge ausgeführt werden, falls der Fachmann das für zweckdienlich erachten sollte.

Beim Tausch von verschlissenen Komponenten ergibt sich also folgende Vorgehensweise: Ausbau des Moduls gemäß dem Verfahren aus Figur 3, Einbau eines bereitgestellten neuen oder reparierten Moduls gemäß dem inversen Verfahren nach Figur 3, Ausbau der verschlissenen Komponenten aus dem demontierten Modul und Einbau von neuen oder reparierten Komponenten. Der Ausbau und Einbau von neuen oder reparierten Komponenten in das demontierte Modul erfolgt also so, dass dadurch der Betrieb der Wasserkrafteinrichtung nicht behindert wird, wodurch sich die Ausfallzeit derselben deutlich verringert, da der erfindungsgemäße Aus- und Einbau eines Moduls sehr viel schneller ausgeführter werden kann, als das entsprechende Verfahren gemäß dem Stand der Technik.

Bei der erstmaligen Montage der Wasserkrafteinrichtung wird ein neues Modul gemäß dem inversen Verfahren nach Figur 3 eingebaut. Es ist zu erwähnen, dass obwohl die Ansprüche so formuliert sind, dass sie den Ausbau eines Moduls beschreiben, die vorliegende Erfindung selbstverständlich auch den Einbau eines Moduls gemäß dem inversen Verfahren beansprucht.

## Patentansprüche

1. Verfahren zur Montage einer Wasserkrafteinrichtung, wobei die Wasserkrafteinrichtung eine hydraulische Maschine mit vertikaler Drehachse, eine elektrische Maschine (1), ein Spiralgehäuse (2), einen Montageraum (3), ein Laufrad (4), eine Laufradwelle (5), eine Wellendichtung (6), eine Zwischenwelle (7), einen Turbinendeckel (8), einen Leitradring (9), eine Vielzahl von Leitschaufeln (10), eine Vielzahl von Leitschaufellager (11), einen Regelring (12), eine Lagerung (13) mit einer Abdeckung für den Regelring (12) und einen Servomotor (14) zum Betätigen des Regelringes (12) umfasst, wobei sich der Montageraum (3) in vertikaler Richtung zwischen dem Spiralgehäuse (2) und der elektrischen Maschine (1) erstreckt und in horizontaler Richtung über den Rand der elektrischen Maschine (1) hinausragt, wobei der Montageraum (3) wenigstens in einem Teil des über den Rand der elektrischen Maschine (1) hinausragenden Bereiches nach oben hin offen ist, und wobei die Wasserkrafteinrichtung ein Modul umfasst, welches das Laufrad (4), die Laufradwelle (5), die Wellendichtung (6), den Turbinendeckel (8), den Leitradring (9), die Leitschaufeln (10) mit Leitschaufellager (11) und den Regelring (12) umfasst, und wobei die Wasserkrafteinrichtung Mittel (15) zum Bewegen des Moduls in vertikaler und horizontaler Richtung umfasst, und wobei das Modul mit Teilen des Spiralgehäuses (2) verschraubt ist, und wobei das Verfahren folgende Schritte S1 bis S3 aufweist:
S1: Blockieren des Laufrades (4) gegenüber Rotation und vertikaler Verschiebung;
S2: Abtrennen des Servomotors (14) vom Regelring (12), Demontage der Abdeckung der Lagerung (13) des Regelringes (12), Ausbau der Zwischenwelle (7), Lösung der Verschraubung des Moduls;
S3: Befestigung des Moduls an den Mitteln (15), Anheben des Moduls, Horizontale Bewegung des Moduls.

2. Verfahren zur Montage einer Wasserkrafteinrichtung nach Anspruch 1, wobei die Wasserkrafteinrichtung ein Turbinenführungslager (16) umfasst, und das Modul das Turbinenführungslager (16) umfasst.

3. Verfahren zur Montage einer Wasserkrafteinrichtung nach einem der vorangehenden Ansprüche, wobei im Schritt S1 die Mittel (15) zum Bewegen des Moduls im Montageraum (3) installiert werden.

## Claims

1. A method of assembling a hydroelectric power device, the hydroelectric power device comprising a hydraulic machine having a vertical axis of rotation, an electric machine (1), a volute casing (2), an assembly chamber (3), an impeller (4), an impeller shaft (5), a shaft seal (6), an intermediate shaft (7), a turbine cover (8), a guide ring (9), a plurality of guide vanes (10), a plurality of guide vane bearings (11), a control ring (12), a bearing (13) with a cover for the control ring (12), and a servomotor (14) for actuating the control ring (12), wherein the mounting space (3) extends in the vertical direction between the volute casing (2) and the electric machine (1) and projects in the horizontal direction beyond the edge of the electric machine (1), wherein the mounting space (3) is open upwardly at least in a part of the region projecting beyond the edge of the electric machine (1), and wherein the water power device comprises a module which includes the impeller (4), the impeller shaft (5), the shaft seal (6), the turbine cover (8), the guide ring (9), the guide vanes (10) with guide vane bearing (11) and the control ring (12), and wherein the water power device comprises means (15) for moving the module in vertical and horizontal direction, and wherein the module is screwed to parts of the volute casing (2), and wherein the method has the following steps S1 to S3:
S1: blocking the impeller (4) against rotation and vertical displacement;
S2: disconnecting the servomotor (14) from the control ring (12), dismantling the cover of the bearing (13) of the control ring (12), removing the intermediate shaft (7), loosening the screw connection of the module ;
S3: Fastening the module to the means (15), lifting the module, horizontal movement of the module.

2. A method of assembling a hydroelectric power device according to claim 1, wherein the water power device comprises a turbine guide bearing (16), and the module comprises the turbine guide bearing (16).

3. Method for assembling a hydroelectric power device according to any one of the preceding claims, wherein in step S1 the means (15) for moving the module are installed in the assembly space (3).

## Revendications

1. Procédé de montage d'un dispositif hydroélectrique, le dispositif hydroélectrique comprenant une machine hydraulique à axe de rotation vertical, une machine électrique (1), une volute (2), un espace de montage (3), une roue (4), un arbre de roue (5), un joint d'arbre (6), un arbre intermédiaire (7), un couvercle de turbine (8), un anneau de roue directrice (9), une pluralité d'aubes directrices (10), une pluralité de paliers d'aubes directrices (11), une bague de régulation (12), un palier (13) avec un couvercle pour la bague de régulation (12) et un servomoteur (14) pour actionner la bague de régulation (12), l'espace de montage (3) s'étendant dans la direction verticale entre la volute (2) et la machine électrique (1) et dépassant dans la direction horizontale au-delà du bord de la machine électrique (1), dans lequel l'espace de montage (3) est ouvert vers le haut au moins dans une partie de la zone dépassant du bord de la machine électrique (1), et dans lequel le dispositif hydroélectrique comprend un module qui comprend la roue (4), l'arbre de roue (5), le joint d'étanchéité d'arbre (6), le couvercle de turbine (8), l'anneau de roue directrice (9), les aubes directrices (10) avec des paliers d'aubes directrices (11) et l'anneau de régulation (12), et dans lequel le dispositif de force hydraulique comprend des moyens (15) pour déplacer le module dans les directions verticale et horizontale, et dans lequel le module est vissé à des parties de la volute (2), et dans lequel le procédé comprend les étapes S1 à S3 suivantes :
S1 : blocage de la roue (4) en rotation et en translation verticale ;
S2 : séparation du servomoteur (14) de la bague de régulation (12), démontage du couvercle du palier (13) de la bague de régulation (12), démontage de l'arbre intermédiaire (7), desserrage du vissage du module ;
S3 : fixation du module sur les moyens (15), levage du module, déplacement horizontal du module.

2. Procédé de montage d'un dispositif hydroélectrique selon la revendication 1Le module comprend le palier de guidage de turbine (16).

3. Procédé de montage d'un dispositif hydroélectrique selon l'une des revendications précédentes, dans lequel, à l'étape S1 , on installe les moyens (15) de déplacement du module dans l'espace de montage (3).
